# EUROPEAN PATENT SPECIFICATION

(11) **EP 1 932 709 B1**
(45) Date of publication and mention of the grant of the patent: **24.06.2009**
(21) Application number: 06425831.2
(22) Date of filing: 12.12.2006
(51) Int. Cl.: B60K 35/00

(54) **Method for manufacturing a panel of an instrument cluster for a vehicle and panel obtained by means of such method**
Verfahren zur Herstellung einer Tafel eines Kombiinstruments für ein Fahrzeug und mittels eines solchen Verfahrens hergestellte Tafel
Procédé pour la fabrication d'un panneau d'un groupe d'instruments pour un véhicule et panneau obtenu selon ledit procédé

(43) Date of publication of application: 18.06.2008
(73) Proprietor: Magneti Marelli S.p.A., Corbetta (MI) (IT)
(72) Inventor: Donelli, Davide c/o Magneti Marelli Sistemi Elettronici S.p.A., 10078 Venaria Reale (IT)
(74) Representative: Jorio, Paolo

(56) References cited:
- WO-A-20/04012955
- JP-A- 2001 343 259
- US-A- 4 170 524
- US-A- 5 452 931
- SABINE PHILIPP: "Presse Information: Aussen Metall - innen Kunststoff: Ein World Grade ABS als Galvanomarke" [Online] 25 August 2004 (2004-08-25), BASF AKTIENGESELLSCHAFT , XP002431976 Retrieved from the Internet: URL:http://www2.basf.de/basf2/html/plastic s/deutsch/pages/presse/04_372.htm> [retrieved on 2007-05-03] * the whole document *

## Description

The present invention relates to a method for manufacturing a panel of an instrument cluster of a vehicle and to a panel obtained by means of such method.

As it is known, modern motor vehicles are equipped with an instrument cluster of analogue or digital type for displaying magnitudes such as, for example, the motor vehicle speed, the engine speed, the fuel level, etc., provided with a plurality of optical indicators of the motor vehicle state indicating, for example, lights on, engine oil level, coolant water temperature, etc.

Generally, the aforesaid instrument clusters comprise a central shaped body provided with openings adapted to accommodate the onboard instruments, and a panel connected to the front part of the central body with the purpose of conferring a particular aesthetic appearance to the instrument cluster. Specifically, the panel comprises a mask which presents openings corresponding to the openings of the central body, and shaped frame rings which are fastened along the periphery of the mask openings and have the purpose of further improving the appearance of the instrument cluster.

For instance JP 2001 343 259 describes an instrument cluster panel for a vehicle, comprising a mask provided with at least one opening for accommodating at least one instrument, and at least one shaped ring fastenable along the edge of said opening, said shaped ring comprising a frame element formed by chromable material and several pins carried by said frame element, said pins being adapted to be welded onto said mask..

Generally, the manufacturing methods of such panels contemplate in order: the moulding of the mask, the making of a plurality of holes distributed along the periphery of the mask openings, the moulding of metallic material shaped rings, the chrome-plating of the shaped rings, and the fastening of the shaped rings about the mask openings by means of a fitting mechanism, i.e. by engaging corresponding teeth arranged on the internal surface of the rings with the holes distributed along the periphery of the mask openings.

The known methods used to manufacture such panels are particularly disadvantageous from the point of view of costs and flexibility if a frequent modification of the shape of the panel openings which accommodate the instruments is required, e.g. for reasons of appearance. Indeed, in such case, it is necessary to mould both a new mask and new shaped rings of different shape. The moulding of new shaped rings of different shape is however not very cost-effective and not simple to implement because, due to the metallic material, a different moulding press is required with respect to the previously used one.

It is the object of the present invention to provide a method for manufacturing a panel for an instrument cluster of a vehicle, which is simple, cost-effective and flexible, and a panel for an instrument cluster of a vehicle manufactured according to such method. This object is achieved by a method for manufacturing a panel according to claim 1 and a panel according to claim 5.

According to the present invention, a method for manufacturing a panel for an instrument cluster of a vehicle and a panel for an instrument cluster of a vehicle manufactured according to such method are suggested, as defined in the attached claims.

For a better understanding of the present invention, a preferred first embodiment will now be described by way of non-limitative example only and with reference to the accompanying drawings, in which:
- figure 1 shows a front view of a panel of an instrument cluster of a vehicle and a plurality of shaped chrome-plated rings for such panel;
- figure 2 shows a flow chart of the method for manufacturing a panel for an instrument cluster of a vehicle, according to the present invention;
- figures 3a and 3b respectively show a portion of a mask of a panel of an instrument cluster and a bottom view of a shaped chrome-plated ring, for the mask in figure 3a; and
- figure 4 shows, in perspective view and magnified scale, a portion of the ring in figure 3b.

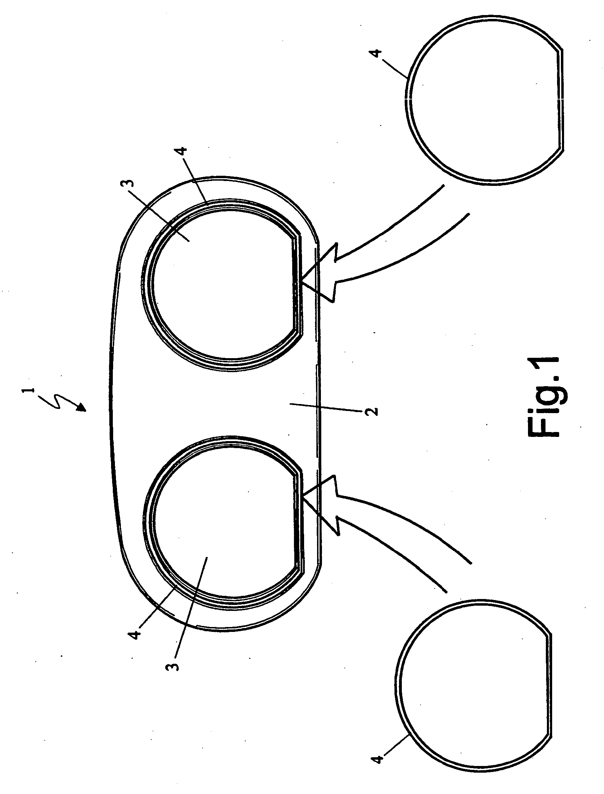

In figure 1, numeral 1 indicates a panel for an instrument cluster of a vehicle (not shown in the figure), comprising a mask 2 in which, for example, two openings 3 of essentially circular shape are obtained to accommodated onboard instruments (not shown in the figure), and two shaped chrome-plated rings 4, also of essentially circular shape, each fastened about a peripheral edge of opening 3. In this manner, each ring 4 presents the same shape as opening 3 which it surrounds thus making the appearance of panel 1 more pleasant.

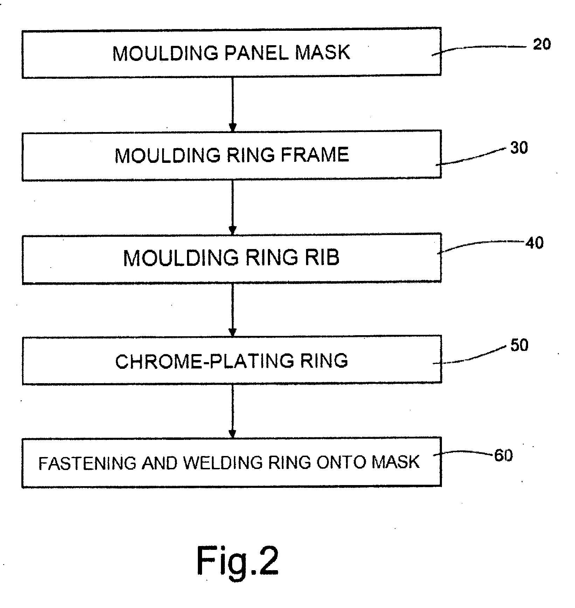

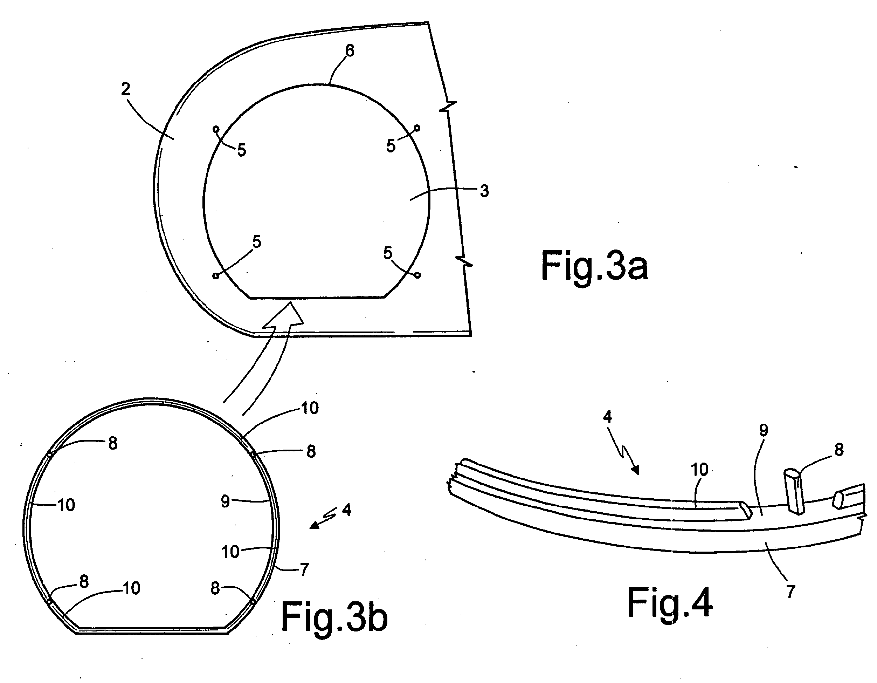

Figure 2 shows the different steps of the manufacturing method of a panel for an instrument cluster of a vehicle, for example of the type shown in figure 1 or in figure 3b.

Specifically, as shown in block 20 of the flow chart of figure 2, in a first step of the method, mask 2 is moulded in a specific moulding press making openings 3 and, as shown by the portion of a mask of a panel of an instrument cluster illustrated in figure 3a, with a plurality of holes 5, four holes in the example shown in figure 3a, distributed along edge 6 of each opening 3.

Once mask 2 is made, during the further steps of the method shown in blocks 30, 40 and 50 of figure 2, rings 4 are moulded by means of a single mould, having the shape of ring 4, which is passed in a specific moulding press.

Specifically, in a further step of the method, shown in block 30 of figure 2 as a sequential operation (it is however apparent that the operations of blocks 20 and 30 may be performed in a different order), a frame element 7 is moulded having the same shape as opening 3 of mask 2 and provided with a plurality of teeth 8, four integral teeth in the example of figure 3b, which protrude from a wall 9 of frame element 7 extending in a direction essentially transversal to the plane of wall 9.

Teeth 8 are spaced out along wall 9 and arranged in positions corresponding to the positions of holes 5 of mask 2 for fastening frame element 7 to mask 2.

Specifically, frame element 7 of ring 4 is made of chromable material, preferable plastic material, because, as known, plastic materials allow to obtain objects of any shape by means of simple moulding procedures. Frame element 7 of ring 4 could be formed, for example, by Luran^{®} which is a material formed by an acrylonitrile and butyl-acrylate based resin.

Specifically, in the aforesaid embodiment of the invention, teeth 8 are made in the same material as frame element 7 because they are moulded together with frame element 7.

It is however apparent that teeth 8 could be made of a different material from that of frame element 7 in a subsequent step.

After moulding frame element 7, in the next step, block 40 of figure 2, on wall 9 of frame element 7 there are moulded ribs 10 (figures 3b and 4) of non-chromable material or partially chromable material, preferably plastic, such as for example Terluran^{®}, which is a material formed by an acrylonitrile, butadiene and styrene based resin. Each rib 10 displays radial dimensions smaller than the radial dimensions of frame element 7 and smaller height than the height of teeth 8. End portions of adjacent ribs 10 are separated by a portion of wall 9 from which a tooth 8 extends.

Moulding press thus produces shaped ring 4 prior to chrome-plating which, as shown in figures 3b and 4, comprises: frame element 7, teeth 8 and ribs 10 which extend along wall 9 of frame element 7.

Specifically, ribs 10 are moulded preferably using the same material with which mask 2 was moulded or using a material which is compatible with that of mask 2 from the welding point of view, by means of which chrome-plated ring 4 is fastened to mask 2, as contemplated in the last step of the method of the invention.

Specifically, the need to make frame element 7 and ribs 10 of chromable material and non-chromable material respectively, essentially derives from the fact that chrome-plated objects are not suitable to be welded, for example by ultrasounds, regardless of the material by which they are formed.

In the next step, shown in block 50 of figure 2, the chrome-plating of shaped ring 4 is thus performed in the intrinsically known manner. Specifically, shaped ring 4 is chrome-plated by immersing shaped ring 4 in a series of baths containing mineral salts which, in virtue of a high electrical voltage applied between the container in which shaped ring 4 is immersed and some metallic plates immersed in the bath itself, are selectively deposited on shaped ring 4. At the end of the chrome-plating step, a shaped chrome-plated ring 4 is indeed obtained in which frame element 7 and the teeth are entirely chrome-plated, and ribs 10 are either free from chrome-plating or partially chrome-plated due to the different material used to form them.

Once the chrome-plating step is ended, during the next step of the method, block 60 of figure 2, shaped chrome-plated ring 4 is firstly fastened onto mask 2 engaging teeth 8 in corresponding holes 5 of mask 2 and then welded onto mask 2 (by means of known techniques), e.g. by means of ultrasounds. During ultrasound welding, ribs 10 of shaped chrome-plated ring 4 are liquefied by stably fastening frame element 7 onto the surface of mask 2.

The main advantage of the method of the invention is that of allowing to manufacture shaped chrome-plated rings of any shape in a simple, cost-effective manner and to obtain chrome-plated rings with the same chrome-plating appearance features and the same stability as chrome-plated metal rings.

It is finally apparent that changes and variations can be made to the methods here described and illustrated without however departing from the scope of protection of the present invention, as defined by the accompanying claims.

In a second embodiment different from the first one, for example, teeth 8 and ribs 10 may be formed by the same chromable material as frame element 7, for example, in the case in which no non-chromable or partially chromable material is available for making ribs 10. In this case, before the step of chrome-plating the ring 4, ribs 10 must be painted with a non-chromable material, so that the surfaces of ribs 10 are entirely coated by such material, not chrome-plated during the chrome-plating step of ring 4, and may thus be welded by ultrasounds onto mask 2.

In a further embodiment, moreover, regardless of whether the ring is made according to the first or second described embodiments, the method of the invention may not comprise the steps related to the making of holes 5 in mask 2 and to the making of teeth 8 on surface 9 of frame element 7. In such case, chrome-plated ring 4, not being provided with teeth, would be welded directly onto mask 2.

## Claims

1. A method for manufacturing a panel (1) for an instrument cluster of a vehicle, said panel comprising a mask (2) provided with at least one opening (3) for accommodating an instrument and at least one shaped ring (4) fastenable along the edge of said opening (3), said shaped ring comprising a frame element (7) formed by chromable material and at least one portion (10) carried by said frame element (7), said portion (10) comprising a non-chromable or partial chromable surface, and being adapted to be welded onto said mask (2),
said method being **characterised in that** it comprises the steps of:
- making said mask (2);
- making said frame element (7);
- making said portion (10) and associating it to frame element (7) making said shaped ring (4);
- subjecting said shaped ring (4) to a chrome-plating process; and
- welding said shaped ring (4) onto said mask (2) of said panel (1) obtaining the fusion (10) of said portion.

2. A method according to claim 1, wherein said portion (10) is entirely made of non-chromable or partially chromable material.

3. A method according to claim 1, wherein said portion (10) is formed by the same chromable material as said frame element (7) and wherein making said portion (10) and associating it to the frame element (7) making said shaped ring (4) comprises the step of:
- coating at least one surface of said portion (10) with a non-chromable or partially chromable material.

4. A method according to claims 1-3, wherein said mask (3) comprises at least one fitting hole (5) for the fastening of said shaped ring (4), further comprising a positioning step in which the following steps are performed:
- making at least one tooth (8) on said wall (9) of said frame element (7); and
- fastening said shaped tooth (4) to said mask (2) engaging said tooth (8) with said fitting hole (5) before performing said welding step.

5. A panel (1) for an instrument cluster of a vehicle, manufactured according to the method of claims from 1 to 4, **characterised in that** it comprises a mask (2) provided with at least one opening (3) for accommodating at least one instrument, and at least one shaped ring (4) fastenable along the edge of said opening (3), wherein said shaped ring comprises a frame element (7) formed by chromable material and at least one rib (10) carried by said frame element (7), said rib being moulded on said frame element (7) and comprising at least a surface formed by non-chromable or partially chromable material and being adapted to be welded onto said mask (2).

6. A panel (1) according to claim 5, wherein said frame element (7) is made of chromable material and said rib (10) is entirely made of non-chromable o partially chromable material.

7. A panel (1) according to claim 5, wherein said rib (10) is formed by the same chromable material as said frame element (7) and is painted with a non-chromable material.

8. A panel (1) according to claims 5-7, wherein said frame element (7) is formed by chromable plastic material.

9. A panel (1) according to any of the claims from 5 to 8, wherein said mask (3) comprises at least one fitting hole (5) and wherein said shaped ring (4) comprises at least one tooth (8) which protrudes from one wall (9) of said frame element (7) to be engaged with said fitting hole (5) of said mask (3).

10. A panel (1) according to any of the claims from 5 to 9, **characterised in that** it comprises a plurality of teeth (8) and a plurality of adjacent ribs (10) reciprocally separated by a portion of said wall (9) of said frame element (7), from which a tooth protrudes (8).

## Patentansprüche

1. Ein Verfahren zum Herstellen einer Tafel (1) für ein Kombiinstrument eines Fahrzeugs, in dem die Tafel eine Maske (2), die mit mindestens einer Öffnung (3) zum Unterbringen eines Instruments ausgestattet ist, und mindestens einen geformten Ring (4) umfasst, der entlang des Rands der Öffnung (3) befestigbar ist, während
der geformte Ring ein Rahmenelement (7) umfasst, das aus verchrombarem Material besteht und mindestens einen Bereich (10) umfasst, der durch das Rahmenelement (7) getragen wird,
der Bereich (10) umfasst eine nicht-verchrombare oder teilweise verchrombare Oberfläche und ist angepasst, auf die Maske (2) aufgeschweisst zu werden,
das Verfahren ist **dadurch gekennzeichnet, dass** es die folgenden Schritte umfasst:
- Herstellen der Maske (2),
- Herstellen des Rahmenelements (7),
- Herstellen des Bereichs (10) und Verbinden des Bereichs mit dem Rahmenelement (7), um den geformten Ring (4) herzustellen,
- den geformten Ring (4) einem Verchromungsprozess aussetzen, und
- Schweißen des geformten Rings (4) auf die Maske (2) der Tafel (1) um ein Verschmelzen des Bereichs (10) zu erreichen.

2. Ein Verfahren gemäß Anspruch 1, in dem der Bereich (10) vollständig aus nicht-verchrombarem oder teilweise verchrombarem Material besteht.

3. Ein Verfahren gemäß Anspruch 1, in dem der Bereich (10) aus demselben verchrombarem Material wie das Rahmenelement (7) besteht und in dem das Herstellen des Bereichs (10) und das Verbinden des Bereichs mit dem Rahmenelement (7) zum Herstellen des geformten Rings (4) den Schritt aufweist:
- Beschichten mindestens einer Oberfläche des Bereichs (10) mit einem nicht-verchrombarem oder teilweise verchrombarem Material.

4. Ein Verfahren gemäß der Ansprüche 1 bis 3, in dem die Maske (3) mindestens ein Montageloch (5) zum Befestigen des geformten Rings (4) umfasst, während das Verfahren weiterhin einen Positionierschritt umfasst, in dem die folgenden Schritten ausgeführt werden:
- Herstellen von mindestens einem Zahn (8) auf der Wand (9) des Rahmenelements (7) und
- Befestigen des geformten Zahns (4) an der Maske (2) durch das Eingreifen des Zahns (8) in das Montageloch (5) vor dem Ausführen des Schweißschrittes.

5. Eine Tafel (1) für ein Kombiinstrument eines Fahrzeugs, die gemäß dem Verfahren der Ansprüche 1 bis 4 hergestellt wurde, **dadurch gekennzeichnet, dass** sie umfasst:
eine Maske (2), die mit mindestens einer Öffnung (3) zum Unterbringen mindestens eines Instruments ausgestattet ist,
und mindestens einen geformten Ring (4), der entlang des Randes der Öffnung (3) befestigbar ist, wobei
der geformte Ring ein Rahmenelement (7) umfasst, das aus verchrombarem Material besteht, und mindestens eine Rippe (10), die durch das Rahmenelement (7) getragen wird, während
die Rippe auf das Rahmenelement (7) aufgeformt wird und mindestens eine Oberfläche umfasst, die aus nicht-verchrombarem oder teilweise verchrombarem Material besteht und angepasst ist, auf die Maske (2) geschweißt zu werden.

6. Eine Tafel (1) gemäß Anspruch 5, in der das Rahmenelement (7) aus verchrombarem Material und die Rippe (10) vollständig aus nicht-verchrombarem oder teilweise verchrombarem Material besteht.

7. Eine Tafel (1) gemäß Anspruch 5, in der die Rippe (10) aus demselben verchrombarem Material wie das Rahmenelement (7) besteht und mit einem nicht-verchrombarem Material angestrichen ist.

8. Eine Tafel (1) gemäß einem der Ansprüche 5 bis 7, in der das Rahmenelement (7) aus verchrombarem Kunststoff besteht.

9. Eine Tafel (1) gemäß einem der Ansprüche 5 bis 8, in der die Maske (3) mindestens ein Montageloch (5) umfasst und in der der geformte Ring (4) mindestens einen Zahn (8) umfasst, der aus der Wand (9) des Rahmenelements (7) vorsteht, um mit dem Montageloch (5) der Maske (3) in Eingriff zu gelangen.

10. Eine Tafel (1) gemäß einem der Ansprüche 5 bis 9, **dadurch gekennzeichnet, dass** sie eine Mehrzahl von Zähnen (8) und eine Mehrzahl von benachbarten Rippen (10) umfasst, die wechselseitig durch ein Teil der Wand (9) des Rahmenelements (7) getrennt sind, aus dem ein Zahn vorsteht (8).

## Revendications

1. Procédé de construction d'un panneau (1) pour un tableau de bord de véhicule, ledit panneau comprenant un masque (2) muni d'au moins une ouverture (3) pour y adapter un instrument et au moins un anneau profilé (4) qui peut être fixé le long du bord de ladite ouverture (3), ledit anneau profilé comprenant un élément de châssis (7) formé par un matériau chromable et au moins une partie (10) supportée par ledit élément de châssis (7), ladite partie (10) comprenant une surface non chromable ou partiellement chromable et étant adaptée pour être soudée sur ledit masque (2),
ledit procédé étant **caractérisé en ce qu'**il comprend les étapes consistant à :
- fabriquer ledit masque (2) ;
- fabriquer ledit élément de châssis (7) ;
- fabriquer ladite partie (10) et l'associer à l'élément de châssis (7) formant ledit anneau profilé (4) ;
- soumettre ledit anneau profilé (4) à un procédé de chromage ; et
- souder ledit anneau profilé (4) sur ledit masque (2) dudit panneau (1) pour obtenir la fusion (10) de ladite partie.

2. Procédé selon la revendication 1, dans lequel ladite partie (10) est entièrement fabriquée en matériau non chromable ou partiellement chromable.

3. Procédé selon la revendication 1, dans lequel ladite partie (10) est formée par le même matériau chromable que ledit élément de châssis (7) et dans lequel la fabrication de ladite partie (10) et son association avec l'élément de châssis (7) formant ledit anneau profilé (4) comprennent l'étape consistant à :
- revêtir au moins une surface de ladite partie (10) d'un matériau non chromable ou partiellement chromable.

4. Procédé selon les revendications 1 à 3, dans lequel ledit masque (3) comprend au moins un trou d'assemblage (5) pour la fixation dudit anneau profilé (4), comprenant en outre une étape de positionnement dans laquelle on effectue les étapes consistant à ;
- fabriquer au moins une dent (8) sur ladite paroi (9) dudit élément de châssis (7) ; et
- fixer ladite dent profilée (4) sur ledit masque (2) en engageant ladite dent (8) dans ledit trou d'assemblage (5) avant d'effectuer ladite étape de soudage.

5. Panneau (1) pour tableau de bord de véhicule fabriqué selon le procédé des revendications 1 à 4, **caractérisé en ce qu'**il comprend un masque (2) muni d'au moins une ouverture (3) pour adapter au moins un instrument, et au moins un anneau profilé (4) pouvant être fixé le long du bord de ladite ouverture (3), dans lequel ledit anneau profilé comprend un élément de châssis (7) formé par un matériau chromable et au moins une nervure (10) supportée par ledit élément de châssis (7) ladite nervure étant moulée sur ledit élément de châssis (7) et comprenant au moins une surface formée en matériau non chromable ou partiellement chromable et étant adaptée pour être soudée sur ledit masque (2).

6. Panneau (1) selon la revendication 5, dans lequel ledit élément de châssis (7) est fabriqué en matériau chromable et ladite nervure (10) est entièrement fabriquée en matériau non chromable ou partiellement chromable.

7. Panneau (1) selon la revendication 5, dans lequel ladite nervure (10) est formée du même matériau chromable que ledit élément de châssis (7) et est peint avec un matériau non chromable.

8. Panneau (1) selon les revendications 5 à 7, dans lequel ledit élément de châssis (7) est formé d'un matériau plastique chromable.

9. Panneau (1) selon l'une quelconque des revendications 5 à 8, dans lequel ledit masque (3) comprend au moins un trou d'assemblage (5) et dans lequel ledit anneau profilé (4) comprend au moins une dent (8) qui fait saillie d'une paroi (9) dudit élément de châssis (7) de manière à s'engager sur ledit trou d'assemblage (5) dudit masque (3).

10. Panneau (1) selon l'une quelconque des revendications 5 à 9, **caractérisé en ce qu'**il comprend une pluralité de dents (8) et une pluralité de nervures adjacentes (10) séparées l'une de l'autre par une partie de ladite paroi (9) dudit élément de châssis (7), dont une dent fait saillie (8).
